# EUROPEAN PATENT APPLICATION

(11) **EP 4 137 969 A1**
(43) Date of publication of application: **22.02.2023**
(21) Application number: 21191465.0
(22) Date of filing: 16.08.2021
(51) Int. Cl.: G06F 16/61, G06F 16/632

(54) **APPARATUS, METHOD AND COMPUTER PROGRAM CODE FOR PROCESSING AN AUDIO STREAM**

(71) Applicant: Utopia Music AG, 6300 Zug (CH)
(72) Inventor: Wahlgren, Linus, 6300 Zug (CH); Flach, Max, 6300 Zug (CH)
(74) Representative: Kolster Oy Ab

(57) **Abstract**

Apparatus, method, and computer program code for processing an audio stream. The method includes: receiving (206) a candidate audio stream and candidate metadata; obtaining (208) candidate audio fingerprints; comparing (212) the candidate audio stream against a database using the candidate audio fingerprints; if no matching track is found, comparing (214, 218) the candidate audio stream against the sample storage using the candidate audio fingerprints, and computing (220) a merging score, and if the merging score meets a merging score threshold, merging (226, 228) the candidate audio fingerprints with sample audio fingerprints of matching sample tracks and the candidate metadata with sample metadata of the matching sample tracks to create a new final track, and saving (230) the new final track in the database, or else storing (236) the candidate audio fingerprints and the candidate metadata in the sample storage.

## Description

### FIELD

Various embodiments relate to an apparatus, method, and computer program code for processing an audio stream.

### BACKGROUND

Audio recognition systems, specifically music recognition systems, often rely on comparing music samples to a large database of known songs. If a music sample is not found in the database, it may not be recognized. Constructing the database requires a large amount of reliable song data, which may be difficult to obtain. The quality of the song data and related metadata must also be sufficient for audio recognition. Constructing the database therefore often requires human intervention, such as manual screening or annotation of song data. The database may also quickly become outdated as new songs are released. Further sophistication may be desirable.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an apparatus for processing an audio stream;
FIG. 2 is a flow chart illustrating embodiments of a method for processing an audio stream;
FIG. 3 illustrates embodiments of comparing a candidate audio stream to sample tracks;
FIG. 4 illustrates embodiments of a merging score;
FIG. 5 and FIG. 6 illustrate embodiments of adjusting verification scores;
FIG. 7 illustrates an embodiment of merging audio fingerprints; and
FIG. 8 and FIG. 9 illustrate embodiments of merging audio metadata.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

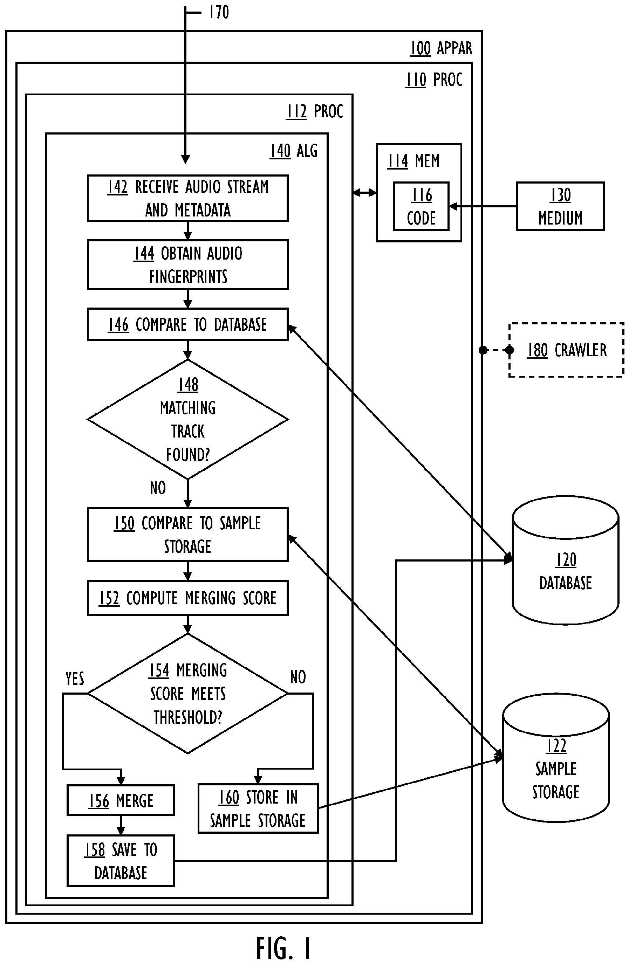

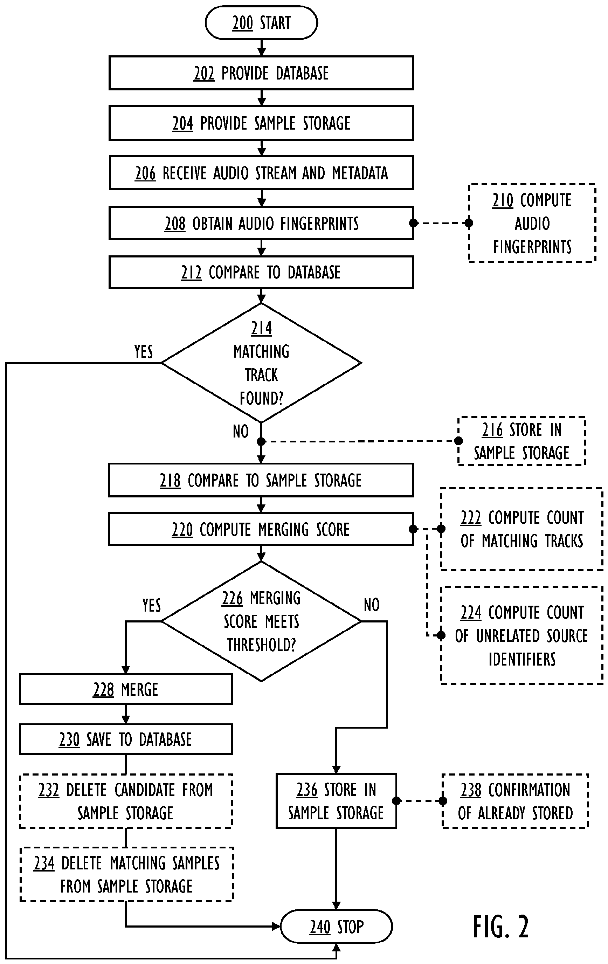

Let us study simultaneously FIG. 1 illustrating embodiments of an apparatus 100 for processing an audio stream 170, and FIG. 2 illustrating embodiments of a method for processing the audio stream.

The apparatus 100 comprises one or more processors 110 configured to cause performance of the apparatus 100. The apparatus further comprises a database 120 configured to store final tracks, and a sample storage 122 configured to store sample tracks. Each final track comprises final audio fingerprints and associated final metadata, and each sample track comprises sample audio fingerprints and associated sample metadata.

In an embodiment, the one or more processors 110 comprise one or more memories 114 including computer program code 116, and one or more processors 112 configured to execute the computer program code 116 to cause performance of the apparatus 100.

In an embodiment, the one or more processors 110 comprise a circuitry configured to cause the performance of the apparatus 100.

Consequently, the apparatus 100 may be implemented as one or more physical units, or as a service implemented by one or more networked server apparatuses. The physical unit may be a computer or another type of a general-purpose off-the-shelf computing device, as opposed to a purpose-build proprietary equipment, whereby research & development costs will be lower as only the special-purpose software (and not the hardware) needs to be designed, implemented, and tested. However, if highly optimized performance is required, the physical unit may be implemented with proprietary integrated circuits. The networked server apparatus may be a networked computer server, which operates according to a client-server architecture, a cloud computing architecture, a peer-to-peer system, or another applicable distributed computing architecture.

A non-exhaustive list of implementation techniques for the processor 112 and the memory 114, or the circuitry, includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 114 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code (or software) 116 may be written by a suitable programming language (such as C, C++, assembler or machine language, for example), and the resulting executable code may be stored in the memory 114 and run by the processor 112. The computer program code 116 implements a part of an algorithm 140 as the method illustrated in FIG. 2. The computer program code 116 may be in source code form, object code form, executable form, or in some intermediate form, but for use in the one or more processors 112 it is in the executable form. There are many ways to structure the computer program code 116: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 116 for performing a wide variety of standard operations. In addition, an operating system (such as a general-purpose operating system or a real-time operating system) may provide the computer program code 116 with system services.

An embodiment provides a computer-readable medium 130 storing the computer program code 116, which, when loaded into the one or more processors 112 and executed by one or more processors 112, causes the one or more processors 112 to perform the method of FIG. 2. The computer-readable medium 130 may comprise at least the following: any entity or device capable of carrying the computer program code 116 to the one or more processors 112, a record medium, a computer memory, a read-only memory, an electrical carrier signal, a telecommunications signal, and a software distribution medium. In some jurisdictions, depending on the legislation and the patent practice, the computer-readable medium 130 may not be the telecommunications signal. In an embodiment, the computer-readable medium 130 is a computer-readable storage medium. In an embodiment, the computer-readable medium 130 is a non-transitory computer-readable storage medium.

The algorithm 140 comprises the operations 142, 144, 146, 148, 150, 152, 154, 156, 158, 160 but not all of them need to be implemented and run on the same apparatus 100, i.e., operation 144, for example, may be performed on another apparatus. The operations include receiving 142 a candidate audio stream and candidate metadata associated with the candidate audio stream, obtaining 144 candidate audio fingerprints for the candidate audio stream, and comparing 146 the candidate audio stream against the final tracks of the database using the candidate audio fingerprints to find a matching final track from the database. If no matching final track is found, the operations further include comparing 148, 150 the candidate audio stream against the sample tracks of the sample storage using the candidate audio fingerprints to find one or more matching sample tracks from the sample storage, and computing 152 a merging score related to the matching sample tracks and/or the candidate audio stream. If the merging score meets a merging score threshold, merging 154, 156 the candidate audio fingerprints with the sample audio fingerprints of the matching sample tracks and the candidate metadata with the sample metadata of the matching sample tracks to create a new final track, and saving 158 the new final track in the database are carried out. If the merging score does not meet the merging score threshold, the candidate audio fingerprints and the candidate metadata are stored 160 in the sample storage as a new sample track.

The method starts in 200 and ends in 240. The method forms a part of the algorithm 140 running in the one or more processors 110. The operations of FIG. 2, such as 206, 208, 212, 214, 218, 220, 226, 228, 230, and 236, may correspond to the operations FIG. 1, such as 142, 144, 146, 148, 150, 152, 154, 156, 158, and 160.

The method for processing an audio stream comprises providing 202 a database configured to store final tracks and providing 204 a sample storage configured to store sample tracks. The database and the sample storage correspond to the database 120 and the sample storage 122 described above and illustrated in FIG. 1. The method further comprises receiving 206 a candidate audio stream and candidate metadata associated with the candidate audio stream, obtaining 208 candidate audio fingerprints for the candidate audio stream, and comparing 212 the candidate audio stream against the final tracks of the database using the candidate audio fingerprints to find a matching final track from the database. If no matching final track is found, the method further includes comparing 214, 218 the candidate audio stream against the sample tracks of the sample storage using the candidate audio fingerprints to find one or more matching sample tracks from the sample storage, and computing 220 a merging score related to the matching sample tracks and/or the candidate audio stream. If the merging score meets a merging score threshold, merging 226, 228 the candidate audio fingerprints with the sample audio fingerprints of the matching sample tracks and the candidate metadata with the sample metadata of the matching sample tracks to create a new final track, and saving 230 the new final track in the database are carried out. If the merging score does not meet the merging score threshold, the candidate audio fingerprints and the candidate metadata are stored 236 in the sample storage as a new sample track.

The operations are not strictly in chronological order in FIG. 2, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The database 120 of final tracks may therefore be extended by saving 158, 230 the new final track in the database. Audio fingerprints are used to determine accurate matches from the database or the sample storage. The quality of the new final tracks is also ensured, as the candidate audio stream is compared 150, 218 to and merged 156, 228 with the matching sample tracks prior to saving 158, 230 the new final track in the database. The merging 156, 228 allows for combining information from multiple sources, thus increasing the reliability of the new final track, and the merging threshold may act as a gatekeeper to prevent potentially unreliable or incomplete information from entering the database. Accordingly, the database may be kept up to date with newly released tracks found in the audio stream.

The database 120 is configured to store final tracks, i.e. known songs or tracks. Each final track comprises final audio fingerprints and associated final metadata. The final audio fingerprints may be obtained for or computed from the candidate audio stream or an audio track that corresponds to the final track prior to saving the final track to the database. Various methods exist for computing audio fingerprints, but no limitation to any one method is presented herein.

The associated final metadata may comprise metadata elements such as a title, a song name, an artist, an album, an album position, and an International Standard Recording Code (ISRC), for example. The metadata elements may also overlap; for example, the title may comprise the song name and the artist, for example. The metadata elements may be stored in the database as key-value pairs or in a table structure wherein a column of a table corresponds to a type of a metadata element.

The database 120 may be pre-populated with final tracks, their final audio fingerprints and associated final metadata. Alternatively, the database 120 may initially be empty. The database may then be populated with final tracks, their final audio fingerprints and associated final metadata as described herein.

Somewhat similar to the database 120, the sample storage 122 is configured to store sample tracks. The sample tracks correspond to songs that may have been encountered in the audio stream, but have not been matched to any one of the final tracks in the database. Each sample track comprises sample audio fingerprints and associated sample metadata. A sample track may originate from the audio stream, and the saving of such a sample track in the sample storage is described in more detail below. However, sample tracks may also be inserted to the sample storage in other ways.

The associated sample metadata may be similar to the associated final metadata. The associated sample metadata may comprise metadata elements such as a title, a song name, an artist, an album, an album position, and an International Standard Recording Code (ISRC), for example. The metadata elements may also overlap; for example, the title may comprise the song name and the artist, for example. The metadata elements may be stored in the sample storage as key-value pairs or in a table structure wherein a column of a table corresponds to a type of a metadata element.

The apparatus 100 may be implemented as a service that listens to online radio stations, i.e. online streams or radio feeds. The receiving 142, 206 of the candidate audio stream and the candidate metadata associated with the candidate audio stream may comprise receiving the candidate audio stream as an online radio stream, and the candidate metadata as an online radio metadata stream such as an Icecast metadata stream. The apparatus 100 may further comprise a crawler 180 that searches for the online radio stations from which candidate audio streams may be received.

The receiving 142, 206 of the candidate audio stream and the candidate metadata associated with the candidate audio stream may further comprise determining a beginning or an end of a song. The candidate metadata may indicate that the song has begun to play in the stream, and the obtaining of the candidate audio fingerprints from the candidate audio stream may begin accordingly. The candidate metadata may also indicate that the song has stopped playing, or the end of the song may be inferred from an indication of a beginning of another song or other program in the candidate metadata. The obtaining of the candidate fingerprints may then be stopped to prevent obtaining external audio fingerprints that are not related to the candidate audio stream in question.

In an embodiment, the obtaining 144, 208 of the candidate audio fingerprints for the candidate audio stream comprises computing 210 the candidate audio fingerprints from the candidate audio stream. Computing the candidate audio fingerprints allows for ensuring that the same audio fingerprinting method is used for every candidate audio stream as for the final audio fingerprints and the sample audio fingerprints. This way, the comparing of the candidate audio stream against the final tracks or the sample tracks using the candidate audio fingerprints is reasonable, as the same audio fingerprints may be expected for matching tracks and the candidate audio stream. The audio fingerprinting method may also be customized or optimized for the purpose described herein, possibly improving the likelihoods of finding suitable matching final tracks and matching sample tracks for the candidate audio stream. The candidate audio fingerprints may also be obtained from an external source, which may save computing resources.

The candidate audio stream is compared 146, 212 against the final tracks of the database 120 using the candidate audio fingerprints, to find the matching final track from the database 120. More specifically, the candidate audio fingerprints are compared against the final audio fingerprints of the database 120. The goal of the comparing is to find a matching final track from the database 120. If the matching final track is found, it may optionally be output via an optional interface of the apparatus.

However, if no matching final track is found, the candidate audio stream is compared 150, 218 against the sample tracks of the sample storage 122 using the candidate audio fingerprints. More specifically, the candidate audio fingerprints are compared against the sample audio fingerprints of the sample storage to find one or more matching sample tracks from the sample storage 122. The merging score is also computed for the matching sample tracks and/or the candidate audio stream. The merging score is used to determine whether the matching sample tracks should be merged or not.

The comparing 150, 218 of the candidate audio stream against the sample tracks and the computing 152, 220 of the merging score may also be carried out at least partially at the same time. In an embodiment, the comparing 150, 218 of the candidate audio stream against the sample tracks of the sample storage is continued until the merging score meets the merging score threshold, or until a termination condition is met. The termination condition may be a time elapsed since a beginning of the comparing, or that the candidate audio stream has been compared against a predefined number or all of the sample tracks of the sample storage. The advantage of simultaneously performing the comparing 150, 218 and the computing 152, 220 of the merging score is that the comparing may be stopped when the merging score meets the merging score threshold, potentially saving time and computing resources.

If the merging score does not meet the merging score threshold, the candidate audio fingerprints and the candidate metadata are stored 160, 236 in the sample storage as a new sample track. This way, unrecognized songs in the audio stream are collected to the sample storage with the expectation that they will re-occur in the audio stream or in other audio streams that store new sample tracks to the same sample storage, and that for the unrecognized song in question, the merging score will meet the merging threshold at a later point when sufficient occurrences of the song have been accumulated in the sample storage.

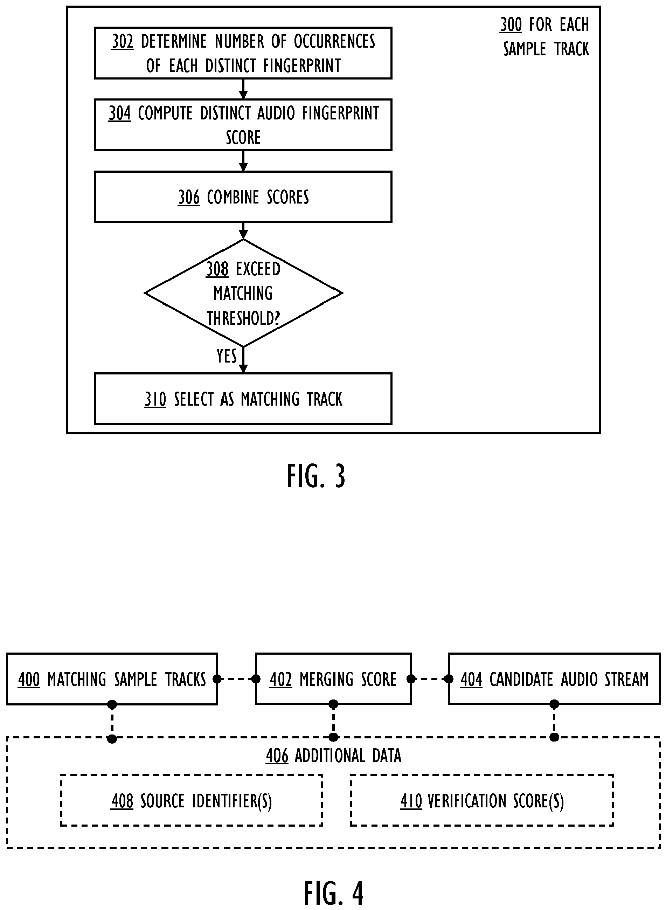

Some embodiments of the merging score 402 are illustrated in FIG. 4. The merging score is related to the matching sample tracks 400, or the candidate audio stream 404, or both. The merging score may, for example, be related to the number of matching sample tracks, the sample audio fingerprints of the matching sample tracks, the candidate audio fingerprints, the matching sample metadata, and/or the candidate metadata. The merging score may be intended to reflect whether sufficient reliable information regarding the unrecognized candidate audio stream is available for storing the information in the database. In this way, the merging threshold may act as a gatekeeper, preventing inadequate or not sufficiently reliable information from entering the database. Similarly, it may also serve a purpose of quality control for the database.

If the merging score meets the merging score threshold, the candidate audio fingerprints are merged 156, 228 with the sample audio fingerprints of the matching sample tracks, and the candidate metadata is merged 156, 228 with the sample metadata of the matching sample tracks to create a new final track. The merging allows for combining multiple instances of audio fingerprint and metadata information, which may increase the reliability and trustworthiness of the new final track. The sample audio fingerprints of the matching sample tracks and the candidate audio fingerprints all do not need to correspond one-to-one, and the merging may harmonize their differences. In this way, the audio fingerprints of the new final track may correspond to a consensus of the candidate audio fingerprints and the sample audio fingerprints. The same principle may also be applied to the merging of the metadata; the resulting final metadata may be a combination or a consensus of the candidate metadata and the sample metadata.

The new final track is then saved to the database 120. The database may thus be extended to include a previously unheard song. The next time the song is encountered in the audio stream (or even in another audio stream connected to the same database), it may be matched to the (new) final track when comparing the audio stream to the final tracks of the database 120.

If no matching final track is found, the candidate audio fingerprints and the candidate metadata may be stored 216 in the sample storage 122, and the comparing 218 may be performed using the candidate audio fingerprints stored in the sample storage. Then, if the merging 156, 228 is performed, the candidate audio fingerprints and the candidate metadata may be deleted 232 from the sample storage after the merging. If the merging is not performed, the storing of the candidate audio fingerprints and the candidate metadata in the sample storage as a new sample track may be performed as a confirmation 238 of the candidate audio fingerprints and the candidate metadata already stored in the sample storage 122. The candidate audio fingerprints and the candidate metadata may be stored in the sample storage also in the case that the merging is performed. This may allow for performance improvements; the candidate audio fingerprints and the candidate metadata need not be accessed or treated separately from the sample audio fingerprints and the sample metadata. Instead, they may both be accessed from the sample storage.

In an embodiment, the sample audio fingerprints of the matching sample tracks and the sample metadata of the matching sample tracks are deleted 234 from the sample storage 122 after the merging 156, 228. This ensures that the sample tracks that correspond to the new final track are not left in the sample storage, as there may no longer be any use for them in the sample storage. Thus, the sample storage may be maintained at a reasonable size, and it may not contain clutter in the form of sample tracks that have already been merged and saved to the database.

In an embodiment illustrated in FIG. 3, the comparing 150, 218 of the candidate audio stream against the sample tracks of the sample storage comprises: for each sample track determining 300, 302 a number of occurrences of each distinct candidate audio fingerprint in the sample audio fingerprints of the sample track. A distinct audio fingerprint score is computed 300, 304 for each distinct candidate audio fingerprint based on the number of occurrences of the distinct candidate audio fingerprint in the candidate audio fingerprints and/or in the sample audio fingerprints of the sample track. The distinct audio fingerprint scores of the distinct candidate audio fingerprints are combined 300, 306 as a matching score of the sample track; and the sample track is selected 308, 310 as a matching sample track if the matching score of the sample track exceeds a matching threshold.

Distinct candidate audio fingerprints may be identified from the candidate audio fingerprints. Here, 'distinct' may refer to a candidate audio fingerprint that has a specific content, sequence, value, hash, or signature, for example. A distinct candidate audio fingerprint may be repeated in the candidate audio fingerprints, or it may only occur once in the candidate audio fingerprints. The distinct candidate audio fingerprint is also considered to occur in the sample audio fingerprints of a sample track, when a sample audio fingerprint whose content, sequence, value, hash, or signature, for example, corresponds to that of the distinct audio fingerprint. The distinct candidate audio fingerprint may also be repeated in the sample audio fingerprints of the sample track, or it may only occur once in the sample audio fingerprints of the sample track.

Here, 'distinct' may not be understood as a content, sequence, value, hash, or signature, for example, of a candidate audio fingerprint, that does not occur in any other candidate audio fingerprint. Instead, it may be understood that a distinct candidate audio fingerprint may be differentiated from another candidate audio fingerprint that has a different content, sequence, value, hash, or signature, for example, based on the content, sequence, value, hash, or signature, for example. A distinct candidate audio fingerprint may be differentiable from another candidate audio fingerprint that has a different content, sequence, value, hash, or signature, for example, but may not be differentiable from yet another candidate audio fingerprint that has a similar or the same content, sequence, value, hash, or signature, for example, at least based on the content, sequence, value, hash, or signature, for example, alone.

Audio fingerprints, including the candidate audio fingerprints, sample audio fingerprints, and final audio fingerprints, for example, may also contain other information in addition to the content, sequence, value, hash, or signature, for example. The content, sequence, value, hash, or signature may correspond to audio characteristics from which the audio fingerprint may be computed. The other information may be a time position of the audio fingerprint, for example. A distinct candidate audio fingerprint may occur at different time positions in the candidate audio stream, such as time positions of 1 second and 5 seconds, for example. The occurrences of the distinct candidate audio fingerprint may not be differentiated based on the content, sequence, value, hash, or signature of the distinct candidate audio fingerprint, as it may be the same or similar for both occurrences, but they may be differentiated based on the time positions.

For each sample track, the number of occurrences of each distinct candidate audio fingerprint may be determined 302. A count of sample audio fingerprints of the sample track that correspond to the distinct candidate audio fingerprint by content, sequence, value, hash, or signature, may be obtained. One sample track may contain zero, one, or another number of occurrences of the distinct candidate audio fingerprint. Similarly, the number of occurrences of each distinct candidate audio fingerprint may be determined for the candidate audio stream. The candidate audio stream may contain one or more occurrences of each distinct candidate audio fingerprint.

A distinct audio fingerprint score may then be computed 304 for each distinct candidate audio fingerprint. The score may be based on the number of occurrences of the distinct candidate audio fingerprint in the candidate audio fingerprints and/or in the sample audio fingerprints of the sample track. The score may be related to a difference in the number of occurrences of the distinct candidate audio fingerprint in the candidate audio fingerprints and in the sample audio fingerprints of the sample track. This means that a high number of occurrences in the candidate audio fingerprints and a low number of occurrences in the sample audio fingerprints, or vice versa, would result in a poor score. In an embodiment, the distinct audio fingerprint score is computed as an absolute value of a difference of the number of occurrences of the distinct candidate audio fingerprint in the candidate audio fingerprints and in the sample audio fingerprints of the sample track. In this case, a high value of the distinct audio fingerprint score may be considered poor, as it may indicate dissimilarities between the candidate audio fingerprints and the sample audio fingerprints, and thus also between the candidate audio stream and the sample track. The dissimilarities may include candidate audio fingerprints that are missing from the sample audio fingerprints, or additional sample audio fingerprints that are not found in the candidate audio fingerprints.

In an embodiment, the distinct audio fingerprint score is computed from the number of occurrences of the distinct candidate audio fingerprint in the candidate audio fingerprints or in the sample audio fingerprints of the sample track. More specifically, the distinct audio fingerprint score may be computed from the number of occurrences of the distinct candidate audio fingerprint in the candidate audio fingerprints or in the sample audio fingerprints of the sample track, whichever number is smaller. The smaller number may indicate a number of matching audio fingerprints, that correspond to the distinct candidate audio fingerprint, between the candidate audio fingerprints and the sample audio fingerprints of the sample track. In this case, a high value of the distinct audio fingerprint score may be desirable.

In an embodiment, the above approaches are combined, and the distinct audio fingerprint score is computed from the number of occurrences of the distinct candidate audio fingerprint in the candidate audio fingerprints or in the sample audio fingerprints of the sample track, whichever number is smaller, and from the absolute value of a difference of the number of occurrences of the distinct candidate audio fingerprint in the candidate audio fingerprints and in the sample audio fingerprints of the sample track. The score may be computed as a difference of the two approaches. This way, both matching and missing audio fingerprints may be considered.

The distinct audio fingerprint scores of the distinct candidate audio fingerprints may be combined 306 as a matching score of the sample track. The combining may comprise computing a weighted or non-weighted sum of the distinct audio fingerprint scores, and/or computing an average of the distinct audio fingerprint scores. The result of the combining may be a matching score. The sample track may be selected 308, 310 as a matching sample track if the matching score of the sample track exceeds a matching threshold.

In an embodiment, the computing 152, 220 of the merging score comprises computing 222 a count of the matching sample tracks. The merging threshold may correspond to a minimum count of matching sample tracks, for example. In an embodiment, the merging threshold is 10, corresponding to a minimum of 10 matching sample tracks.

FIG. 4 illustrates embodiments of the merging score 402. The merging score is related to the matching sample tracks 400 and/or the candidate audio stream 404. In an embodiment, the merging score 402 is further related to additional data 406 of at least one of the candidate audio stream and the matching sample tracks. The additional data 406 may be at least partially comprised in the candidate metadata and the sample metadata of the matching sample tracks, or the additional data 406 may be separate form the candidate metadata and the sample metadata of the matching sample tracks. The additional data 406 may contain information that is relevant in determining whether the merging should be performed.

In an embodiment, the additional data 406 comprises one or more source identifiers 408 of the candidate audio stream and/or the matching sample tracks, and the merging score 402 is related to the source identifiers of the candidate audio stream and/or the matching sample tracks. The source identifiers 408 are related to the sources of the candidate audio stream and the matching sample tracks. A source identifier may comprise a country identifier, an online radio station or stream identifier, and/or a party identifier of a party associated with the source. Some sources may be known to provide more reliable audio streams and associated metadata than others, and the quality of the sources of the candidate audio stream and the matching sample tracks may be taken into account when determining whether the merging should be performed.

The computing 152, 220 of the merging score may comprise computing the merging score from the source identifiers 408. In an embodiment, the computing 152, 220 of the merging score comprises computing 224 a count of unrelated source identifiers 408 of the candidate audio stream 404 and/or the matching sample tracks 400. Confidence in merging the candidate audio stream and the matching sample tracks may be increased if a number of unrelated sources have provided audio fingerprints, i.e. the candidate or sample audio fingerprints, that result in a match. Also, if a plurality of the matching sample tracks originate from the same source, the plurality of the matching tracks may only be considered to provide as much information as one matching track from the same source. If a number of unrelated sources have provided sample tracks that are found to be similar in the search for matching sample tracks, the matching sample tracks may be trusted with greater confidence.

Whether the source identifiers are related or not may be determined by comparing the source identifiers 408 to one another. For example, if a source identifier is a country identifier in a standardized format, comparing the source identifiers, i.e. the country identifiers, may reveal whether the source identifiers are the same, i.e. related. Similar comparisons may be carried out for other types of source identifiers, too. More complex rules for the comparing are also possible; two country identifiers may also be considered related if they refer to neighbouring countries, for example. In the case of parties associated with the sources, one party may own or be in control of multiple sources. It may be likely that similar contents are broadcast by some or all of the sources controlled by the party in question; the sources may therefore be considered to be related, as their broadcast content may be duplicated from one related source to another.

Related to the above embodiments, the merging threshold may correspond to a minimum count of unrelated source identifiers 408. In an embodiment, the merging threshold is 3, corresponding to a minimum of 3 unrelated source identifiers.

In an embodiment, the additional data 406 comprises one or more verification scores 410 of the candidate audio stream 404 and/or the matching sample tracks 400, wherein each verification score 410 is associated with a respective source identifier 408 of a matching sample track or the candidate audio stream. The merging score 402 may be related to the verification scores 410 of the candidate audio stream 404 and/or the matching sample tracks 400. Each verification score 410 may reflect the reliability of the source related to the respective source identifier 408. The computing 152, 220 of the merging score may comprise computing the merging score from the verification scores. Computing the merging score from the verification scores allows for weighing the reliability of the candidate audio stream and/or the matching sample tracks, and that whether the candidate audio stream and/or the matching sample tracks together are sufficient for merging. Even if a large number of matching sample tracks are found, if their verification scores indicate that their sources are untrustworthy, it may be unwise to merge the matching sample tracks. On the other hand, if the verification score of the candidate audio stream is very high, it may be so that zero matching sample tracks are required for the merging, i.e. the candidate audio stream alone is good enough to be merged with zero matching sample tracks (if none were found). However, the above scenario may require an exceptionally high verification score for the candidate audio stream, and it may be a rare occurrence.

The verification score 410 may be a numerical value, and it may have an upper and lower limit. For example, the verification score may range from 0 to 100. The verification score may also be expressed as a Boolean value, wherein 1 or 'True' may indicate that the respective source identifier is verified, and 0 or 'False' may indicate that the source identifier is unverified. The numerical value and the Boolean value may also be connected with a threshold, so that numerical values that meet or exceed the threshold are considered True, or correspondingly, verified, and values that do not meet the threshold are considered False, or correspondingly, unverified.

The verification scores 410 of the candidate audio stream 404 and the matching sample tracks 400 may be combined when computing the merging score. The merging score may be computed as a weighted or non-weighted sum of the verification scores, or an average of the verification scores, for example.

The merging score 402 may also be a compound or combination of some or all of the approaches described above. In an embodiment, the merging score 402 is related to the count of the matching sample tracks 400, one or more source identifiers 408 of the candidate audio stream 404 and/or the matching sample tracks 400, and the verification scores 410 of the candidate audio stream 404 and/or the matching sample tracks 400. The merging score 402 may be a (weighted) sum or average of the above components, or the components may be separate in the merging score, i.e. the merging score may comprise three different values. Correspondingly, the merging threshold may be a single value, and/or it may comprise a plurality of separate components, such as three separate components. This way, separate thresholds may be set for the count of matching sample tracks 400, the source identifiers 408, and the verification scores 410, for example.

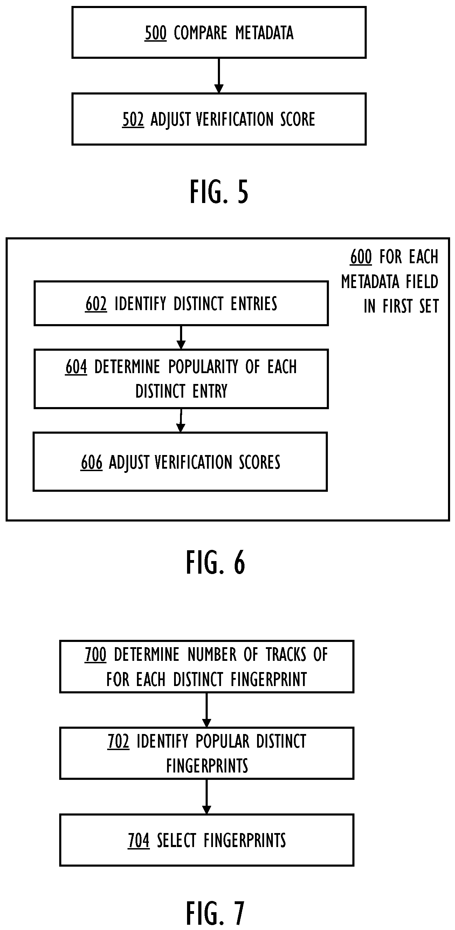

FIG. 5 and FIG. 6 illustrate embodiments related to the adjusting of the verification scores. In the embodiment of FIG. 5, if a matching final track is found, the candidate metadata is compared 500 with an associated final metadata of the matching final track, and the verification score associated with the source identifier of the candidate audio stream is adjusted 502 based on the comparing 500. If the final metadata of the matching final track is similar to or the same as the candidate metadata, it may be considered as evidence for the reliability of the source of the candidate audio stream, Therefore, the verification score associated with the source identifier of the candidate audio stream may be adjusted, specifically increased, to indicate an increased level of trust in the source of the candidate audio stream. On the other hand, if the comparing 500 shows that the candidate metadata and the final metadata differ greatly, then it may be likely that the candidate metadata contains incorrect information. Therefore, the verification score may be decreased to indicate a decreased level of trust in the source.

In the embodiment of FIG. 6, the comparing 150, 218 of the candidate audio stream against the sample tracks of the sample storage comprises: if no matching final track is found and the merging 156, 228 is performed, for each metadata field in a first set of metadata fields, identifying 600, 602 distinct metadata field entries in the candidate metadata and the sample metadata of the matching sample tracks. A popularity of each distinct metadata field entry among the candidate metadata and the sample metadata of the matching sample tracks is determined 600, 604, and the verification scores 410 of the candidate audio stream 404 and/or the matching sample tracks 400 are adjusted 606 based on the popularities of the distinct metadata field entries corresponding to their respective metadata field entries. The verification scores may therefore also be adjusted based on comparisons between the sample metadata of the matching sample tracks and the candidate metadata.

In the above, the metadata fields may correspond to the type of a metadata element, such as title, song name, artist, album, album position, or ISRC, for example. The first set of metadata fields may comprise one or more of the above, such as song name, artist, album, and album position, for example. 'Distinct' has the same meaning here as in the context of the distinct candidate audio fingerprints. The distinct metadata field entries may comprise different values or strings entered for the metadata field. The popularity or count of each distinct metadata field entry within the metadata field entries is determined. Based on the popularities, the verification scores of the sources of the candidate audio stream and the matching sample tracks may be adjusted. Sources that have provided popular metadata field entries may have their verification scores increased, and sources that have provided non-popular metadata field entries may have their verification scores decreased.

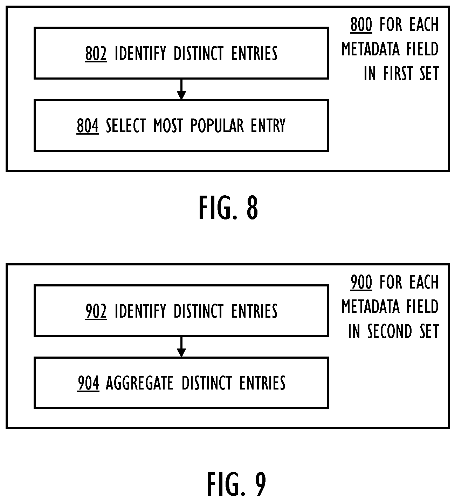

FIG. 7, FIG. 8, and FIG. 9 illustrate embodiments related to merging; FIG. 7 specifically to the merging of audio fingerprints, and FIG. 8 and FIG. 9 to the merging of audio metadata. In the embodiment of FIG. 7, the merging 156, 228 of the candidate audio fingerprints with the sample audio fingerprints of the matching sample tracks comprises: for each distinct audio fingerprint of the candidate audio fingerprints and the sample audio fingerprints, determining 700 the number of tracks, from the candidate audio stream and the matching sample tracks, within which the distinct audio fingerprint is found. Popular distinct audio fingerprints that are found in a number of tracks greater than or equal to a fingerprint merging threshold are identified 702, and new final track audio fingerprints that correspond to the popular distinct audio fingerprints are selected 704 from the candidate audio fingerprints and the sample audio fingerprints for the new final track. In an embodiment, the fingerprint merging threshold is 3, i.e. the distinct audio fingerprint must occur in at least 3 tracks for the candidate audio fingerprints and/or the sample audio fingerprints that correspond to the distinct audio fingerprint to be selected for the new final track audio fingerprints. This may be considered a consensus approach, and it may ensure that additional audio fingerprints, whether in the sample audio fingerprints or the candidate audio fingerprints, that are not necessarily related to the song in question, are not included for the new final track. For example, the additional audio fingerprints may result from a radio host talking over the song. As the radio host is unlikely to talk over the song in the same manner every time the song is played, it is unlikely that the same additional audio fingerprints are generated multiple times. Also, if the sample tracks and the candidate audio stream originate from multiple different and/or unrelated sources as may be indicated by the source identifiers 408, it is unlikely that the same host would be associated with each unrelated source, and that she would talk over the song in the same manner for each sample track and the candidate metadata.

In the embodiment of FIG. 8, the merging 156, 228 of the candidate metadata with the sample metadata of the matching sample tracks comprises: for each metadata field in a first set of metadata fields identifying 800, 802 distinct metadata field entries in the candidate metadata and the sample metadata of the matching sample tracks, and selecting 800, 804 the most popular distinct metadata field entry of the metadata field in the candidate metadata and the sample metadata of the matching sample tracks, for the new final track. As for the comparing of the candidate audio stream against the sample tracks of the sample storage, the metadata fields may correspond to the type of a metadata element, such as title, song name, artist, album, album position, or ISRC, for example. The first set of metadata fields may comprise one or more of the above, such as song name, artist, album, and album position, for example. The most popular distinct metadata field entry is most likely to be correct, and is therefore selected for the new final track.

In the embodiment of FIG. 9, the merging 156, 228 of the candidate metadata with the sample metadata of the matching sample tracks comprises: for each metadata field in a second set of metadata fields identifying 900, 902 distinct metadata field entries in the candidate metadata and the sample metadata of the matching sample tracks; and aggregating 900, 904 the distinct metadata field entries of the metadata field for the new final track. As for the comparing of the candidate audio stream against the sample tracks of the sample storage, the metadata fields may correspond to the type of a metadata element, such as title, song name, artist, album, album position, or ISRC, for example. The second set of metadata fields may comprise one or more of the above, such as the ISRC, for example. The second set of metadata fields and the first set of metadata fields may not contain the same metadata fields, i.e. they may be mutually exclusive. If all of the distinct metadata field entries of the second set of metadata fields are considered equally valuable or correct, or if it desirable to keep all of the distinct metadata field entries, they may be aggregated for the new final track.

Even though the invention has been described with reference to one or more embodiments according to the accompanying drawings, it is clear that the invention is not restricted thereto but may be modified in several ways within the scope of the appended claims. All words and expressions should be interpreted broadly, and they are intended to illustrate, not to restrict, the embodiments. It will be obvious to a person skilled in the art that, as technology advances, the inventive concept may be implemented in various ways.

## Claims

1. An apparatus (100) for processing an audio stream (170), comprising:
a database (120) configured to store final tracks, each final track comprising final audio fingerprints and associated final metadata;
a sample storage (122) configured to store sample tracks, each sample track comprising sample audio fingerprints and associated sample metadata; and
one or more processors (110) configured to cause performance of at least the following:
receiving (142) a candidate audio stream and candidate metadata associated with the candidate audio stream;
obtaining (144) candidate audio fingerprints for the candidate audio stream;
comparing (146) the candidate audio stream against the final tracks of the database using the candidate audio fingerprints to find a matching final track from the database;
if no matching final track is found, comparing (148, 150) the candidate audio stream against the sample tracks of the sample storage using the candidate audio fingerprints to find one or more matching sample tracks from the sample storage, and computing (152) a merging score related to the matching sample tracks and/or the candidate audio stream, and
if the merging score meets a merging score threshold, merging (154, 156) the candidate audio fingerprints with the sample audio fingerprints of the matching sample tracks and the candidate metadata with the sample metadata of the matching sample tracks to create a new final track, and saving (158) the new final track in the database,
or else storing (160) the candidate audio fingerprints and the candidate metadata in the sample storage as a new sample track.

2. The apparatus of claim 1, wherein the one or more processors are further configured to cause performance of at least the following:
if no matching final track is found, storing (216) the candidate audio fingerprints and the candidate metadata in the sample storage, and performing the comparing (218) using the candidate audio fingerprints stored in the sample storage, and,
if the merging (228) is performed, deleting (232) the candidate audio fingerprints and the candidate metadata from the sample storage after the merging,
or else performing the storing of the candidate audio fingerprints and the candidate metadata in the sample storage as a new sample track as a confirmation (238) of the candidate audio fingerprints and the candidate metadata already stored in the sample storage.

3. The apparatus of any preceding claim, wherein the one or more processors are further configured to cause performance of at least the following:
after the merging, deleting (234) the sample audio fingerprints of the matching sample tracks and the sample metadata of the matching sample tracks from the sample storage.

4. The apparatus of any preceding claim, wherein the obtaining of the candidate audio fingerprints for the candidate audio stream comprises computing (210) the candidate audio fingerprints from the candidate audio stream.

5. The apparatus of any preceding claim, wherein the comparing of the candidate audio stream against the sample tracks of the sample storage comprises:
for each sample track,
determining (300, 302) a number of occurrences of each distinct candidate audio fingerprint in the sample audio fingerprints of the sample track;
computing (300, 304) a distinct audio fingerprint score for each distinct candidate audio fingerprint based on the number of occurrences of the distinct candidate audio fingerprint in the candidate audio fingerprints and/or in the sample audio fingerprints of the sample track;
combining (300, 306) the distinct audio fingerprint scores of the distinct candidate audio fingerprints as a matching score of the sample track; and
selecting (300, 310) the sample track as a matching sample track if the matching score of the sample track exceeds a matching threshold.

6. The apparatus of any preceding claim, wherein the computing of the merging score comprises computing (222) a count of the matching sample tracks.

7. The apparatus of any preceding claim, wherein the merging score (402) is further related to additional data (406) of at least one of the candidate audio stream and the matching sample tracks.

8. The apparatus of claim 7, wherein the additional data comprises one or more source identifiers (408) of the candidate audio stream and/or the matching sample tracks, and wherein the merging score is related to the source identifiers of the candidate audio stream and/or the matching sample tracks.

9. The apparatus of claim 8, wherein the computing of the merging score comprises computing (224) a count of unrelated source identifiers of the candidate audio stream and/or the matching sample tracks.

10. The apparatus of any preceding claim 7-9, wherein the additional data comprises one or more verification scores (410) of the candidate audio stream and/or the matching sample tracks, wherein each verification score is associated with a respective source identifier of a matching sample track or the candidate audio stream, and wherein the merging score is related to the verification scores of the candidate audio stream and/or the matching sample tracks.

11. The apparatus of claim 10, wherein the one or more processors are further configured to cause performance of at least the following:
if a matching final track is found, comparing (500) the candidate metadata with an associated final metadata of the matching final track, and adjusting (502) the verification score associated with the source identifier of the candidate audio stream based on the comparing.

12. The apparatus of any preceding claim 10-11, wherein the comparing of the candidate audio stream against the sample tracks of the sample storage comprises:
if no matching final track is found and the merging is performed,
for each metadata field in a first set of metadata fields,
identifying (600, 602) distinct metadata field entries in the candidate metadata and the sample metadata of the matching sample tracks;
determining (600, 604) a popularity of each distinct metadata field entry among the candidate metadata and the sample metadata of the matching sample tracks; and
adjusting (606) the verification scores of the candidate audio stream and/or the matching sample tracks based on the popularities of the distinct metadata field entries corresponding to their respective metadata field entries.

13. The apparatus of any preceding claim, wherein the merging of the candidate audio fingerprints with the sample audio fingerprints of the matching sample tracks comprises:
for each distinct audio fingerprint of the candidate audio fingerprints and the sample audio fingerprints, determining (700) the number of tracks, from the candidate audio stream and the matching sample tracks, within which the distinct audio fingerprint is found;
identifying (702) popular distinct audio fingerprints that are found in a number of tracks greater than or equal to a fingerprint merging threshold; and
selecting (704), from the candidate audio fingerprints and the sample audio fingerprints, new final track audio fingerprints that correspond to the popular distinct audio fingerprints for the new final track.

14. The apparatus of any preceding claim, wherein the merging of the candidate metadata with the sample metadata of the matching sample tracks comprises:
for each metadata field in a first set of metadata fields,
identifying (800, 802) distinct metadata field entries in the candidate metadata and the sample metadata of the matching sample tracks; and
selecting (800, 804) the most popular distinct metadata field entry of the metadata field in the candidate metadata and the sample metadata of the matching sample tracks, for the new final track.

15. The apparatus of any preceding claim, wherein the merging of the candidate metadata with the sample metadata of the matching sample tracks comprises:
for each metadata field in a second set of metadata fields,
identifying (900, 902) distinct metadata field entries in the candidate metadata and the sample metadata of the matching sample tracks; and
aggregating (900, 904) the distinct field metadata entries of the metadata field for the new final track.

16. The apparatus of any preceding claim, wherein the one or more processors (110) comprise:
one or more memories (114) including computer program code; and
one or more processors configured to execute the computer program code to cause performance of the apparatus.

17. A method for processing an audio stream, the method comprising:
providing (202) a database configured to store final tracks, each final track comprising final audio fingerprints and associated final metadata;
providing (204) a sample storage configured to store sample tracks, each sample track comprising sample audio fingerprints and associated sample metadata;
receiving (206) a candidate audio stream and candidate metadata associated with the candidate audio stream;
obtaining (208) candidate audio fingerprints for the candidate audio stream;
comparing (212) the candidate audio stream against the final tracks of the database using the candidate audio fingerprints to find a matching final track from the database;
if no matching final track is found, comparing (214, 218) the candidate audio stream against the sample tracks of the sample storage using the candidate audio fingerprints to find one or more matching sample tracks from the sample storage, and computing (220) a merging score related to the matching sample tracks and/or the candidate audio stream, and
if the merging score meets a merging score threshold, merging (226, 228) the candidate audio fingerprints with the sample audio fingerprints of the matching sample tracks and the candidate metadata with the sample metadata of the matching sample tracks to create a new final track, and saving (230) the new final track in the database,
or else storing (236) the candidate audio fingerprints and the candidate metadata in the sample storage as a new sample track.

18. A computer-readable medium (130) comprising computer program code (116), which, when executed by one or more processors (112), causes performance of a method for processing an audio stream, comprising:
providing (202) a database configured to store final tracks, each final track comprising final audio fingerprints and associated final metadata;
providing (204) a sample storage configured to store sample tracks, each sample track comprising sample audio fingerprints and associated sample metadata;
receiving (206) a candidate audio stream and candidate metadata associated with the candidate audio stream;
obtaining (208) candidate audio fingerprints for the candidate audio stream;
comparing (212) the candidate audio stream against the final tracks of the database using the candidate audio fingerprints to find a matching final track from the database;
if no matching final track is found, comparing (214, 218) the candidate audio stream against the sample tracks of the sample storage using the candidate audio fingerprints to find one or more matching sample tracks from the sample storage, and computing (220) a merging score related to the matching sample tracks and/or the candidate audio stream, and
if the merging score meets a merging score threshold, merging (226, 228) the candidate audio fingerprints with the sample audio fingerprints of the matching sample tracks and the candidate metadata with the sample metadata of the matching sample tracks to create a new final track, and saving (230) the new final track in the database,
or else storing (236) the candidate audio fingerprints and the candidate metadata in the sample storage as a new sample track.
